**Europäisches Patentamt**

**European Patent Office**

**Office européen des brevets**

(19)

(11) Numéro de publication : **0 472 454 A1**

# (12) DEMANDE DE BREVET EUROPEEN

(21) Numéro de dépôt : **91402253.8**

(22) Date de dépôt : **16.08.91**

(51) Int. Cl.$^5$ : **B60R 1/06**

(30) Priorité : **20.08.90 FR 9010471**

(43) Date de publication de la demande :
**26.02.92 Bulletin 92/09**

(84) Etats contractants désignés :
**BE DE ES FR GB IT**

(71) Demandeur : **Kassapian, Michel**
**1bis Rue Georges Marie**
**F-92130 Issy-les-Moulineaux (FR)**

(72) Inventeur : **Kassapian, Michel**
**1bis Rue Georges Marie**
**F-92130 Issy-les-Moulineaux (FR)**

(54) **Rétroviseur extérieur de véhicule.**

(57) L'invention concerne un rétroviseur extérieur pour véhicule, ce rétroviseur comportant un boîtier-support (31) de glace ou miroir, coopérant avec une rotule (30) insérée dans un élément support (B) monté à pivotement sur un second élément (C) sous-jacent au premier élément, destiné à être fixé sur la carrosserie du véhicule, et ce de façon à pivoter librement vers l'avant ou vers l'arrière en revenant à une position de repos par rapport à laquelle est réglé le rétroviseur. Selon l'invention, la rotule (30) est pourvue d'un bras (30a) se prolongeant à l'intérieur du boîtier-support de glace ou miroir et conçu de façon à pouvoir être positionné de façon réglable sur une structure (31a) de boîtier-support (31).

EP 0 472 454 A1

FIG. 1

La présente invention concerne un dispositif de rétroviseur universel indéréglable, destiné à être monté à l'extérieur d'un véhicule susceptible de mouvement, par exemple du type camion, véhicule automobile lourd ou léger, motocyclette et cyclomoteur, et véhicules analogues.

Les rétroviseurs connus jusqu'à présent présentent tous des inconvénients, notamment en ce qui concerne leurs capacités d'adaptation à différents véhicules. C'est ainsi que, selon la nature du véhicule, les constructeurs optent pour le rétroviseur qui convient le mieux au modèle du véhicule en question, mais qui n'est pas spécialement conçu pour ledit véhicule et il en est pour preuve de constater les nombreux rétroviseurs brisés ou en état de mauvais fonctionnement pour détérioration prématurée. En outre, de tels rétroviseurs ne peuvent être réglés dans le cas où le véhicule doit tracter un autre véhicule du type remorque, caravane, roulotte ou analogue.

La présente invention vise à obvier à tous ces inconvénients en fournissant un nouveau type de rétroviseur universel indéréglable.

Un objet de la présente invention est de réaliser un rétroviseur indéréglable qui, une fois positionné par le conducteur, rend superflu l'avantage d'un réglage de l'intérieur du véhicule.

Un autre objet de la présente invention est de réaliser un rétroviseur qui est moins vulnérable aux chocs ou aux différents heurts ou bien impacts grâce à un agencement permettant d'amortir ces derniers.

Encore un autre objet de l'invention est de réaliser un rétroviseur qui est susceptible d'être monté soit à gauche, soit à droite du véhicule, grâce à un agencement particulier le rendant réversible.

Encore un objet de la présente invention est de réaliser un rétroviseur qui est susceptible d'être fixé au véhicule suivant un positionnement adaptable à distance de la cabine du conducteur, tout en étant escamotable dans le profil du véhicule. Il est clair qu'un tel rétroviseur associé à une embase appropriée peut être adapté à la quasi-totalité des véhicules.

La présente invention a donc pour objet un rétroviseur extérieur pour véhicules susceptible de mouvement, du type camion, véhicule automobile lourd ou léger, motocyclette ou vélomoteur et engins analogues, ce rétroviseur comportant un boîtier support de glace, coopérant avec une rotule insérée dans un élément support monté à pivotement sur un second élément sous-jacent au premier élément, destiné à être fixé par l'intermédiaire d'une embase sur la carrosserie du véhicule, et ce de façon à pivoter librement vers l'avant ou vers l'arrière en revenant à une position statique par rapport à laquelle est réglé le rétroviseur, ce dernier étant caractérisé par le fait que la rotule est pourvue d'un bras se prolongeant à l'intérieur du boîtier-support de glace et conçu de façon à pouvoir être positionné de façon réglable sur une structure d'appui du boîtier-support.

Selon une forme préférée de réalisation de l'invention, l'élément supérieur est accouplé à l'élément sous-jacent par un axe pivotant monté dans un logement interne de l'élément sous-jacent et comportant une partie supérieure fixée dans un logement de forme correspondante prévu dans la face inférieure de l'élément supérieur, une partie médiane périphériquement en relief, agencée pour coopérer avec des moyens permettant le retour de l'axe dans sa position de repos prédéterminée et une partie inférieure reçue à pivotement dans une plaque de fond solidaire de l'élément sous-jacent.

Selon une variante de réalisation, la coquille est monobloc et pourvue d'un logement interne de forme sensiblement hémisphérique, conçu pour recevoir la rotule. Ce logement est percé d'un premier alésage de diamètre sensiblement égal à celui du bras de rotule, tandis qu'est prévu un second alésage, coaxial au premier et destiné à recevoir des moyens de blocage de la rotule.

Les moyens permettant le retour de l'axe pivotant dans sa position réglée prédéterminée sont constitués par des moyens élastiques sollicitant vers l'extérieur des billes qui sont d'une part disposées avec les moyens élastiques dans un alésage ménagé orthogonalement à l'axe pivotant dont la partie médiane présente un contour cylindrique coopérant avec le contour interne ovalisé de l'évidement de l'élément sous-jacent dans lequel elle est encastrée et, d'autre part, dans des évidements périphériques internes de l'élément sous-jacent. Selon une forme de réalisation particulière, les évidements dans lesquels sont logées des billes sont des trous traversant dont le diamètre est sensiblement inférieur au diamètre des billes. Les billes sont en un matériau possédant les caractéristiques de résistance mécanique appropriées à l'usage, par exemple en acier inoxydable. Ces billes sont au nombre de deux tandis que les évidements sont au nombre de trois, dont les deux en regard à 180° et l'intermédiaire à 90° des deux autres, de façon que l'une ou l'autre des billes en position escamotée du rétroviseur puisse occuper l'évidement intermédiaire. Le réglage personnalisé du rétroviseur est réalisé au moyen d'une molette du type vis pointeau qui solidarise l'élément supérieur à la rotule support du rétroviseur dans la position désirée par le conducteur.

Dans la variante de réalisation exposée ci-dessus, les moyens de blocage de la rotule sont constitués par une pièce mobile montée à glissement dans le second alésage et agencée pour épouser la forme de la rotule, ladite pièce mobile coopérant avec un bouton à molette pour bloquer la rotule dans la position désirée.

D'autres avantages et caractéristiques de la présente invention apparaîtront à la lecture de la description non limitative suivante d'une forme de réalisation particulière de rétroviseur selon l'invention, en référence aux dessins annexés dans lesquels :

– la Figure 1 est une vue en partie en plan, au niveau du support de miroir, en partie en coupe verticale axiale au niveau des éléments permettant le réglage du miroir, d'un rétroviseur universel selon l'invention ;

– la Figure 2 est une vue en perspective de l'axe de pivotement A ;

– la Figure 3 est une vue en coupe de l'élément sous-jacent ou coquille C ;

– la Figure 4 est une vue en coupe prise au même niveau que celle de la Figure 3 d'une variante de réalisation de l'élément sous-jacent ou coquille C, et

– la Figure 5 est une vue, similaire à celle de la Figure 1, d'une variante de réalisation du rétroviseur de l'invention.

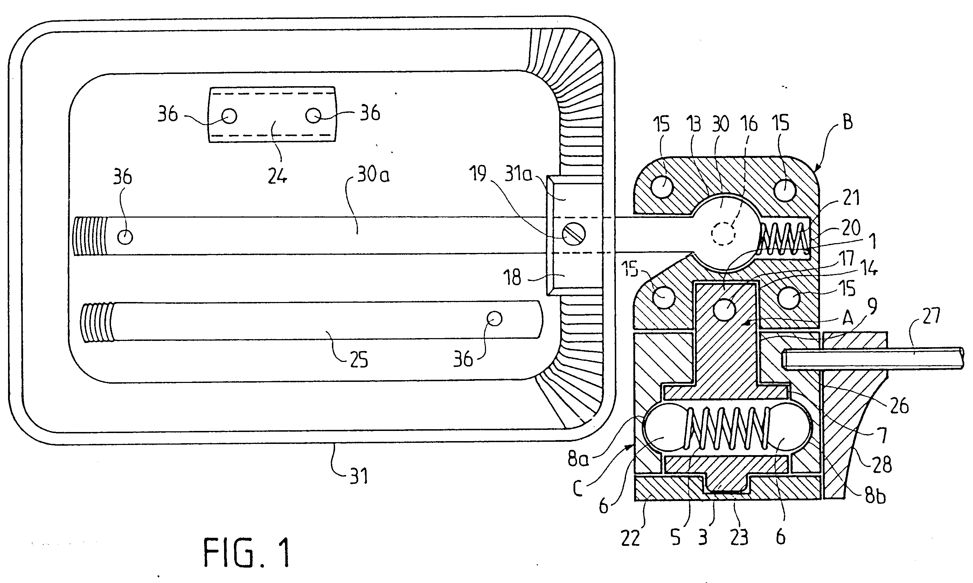

Si l'on se réfère plus particulièrement à la Figure 1, on voit que le bras 30a d'une rotule 30 est fixé sur une zone support 31a du boîtier 31 par une vis 19. La rotule 30 est engagée dans un élément supérieur ou coquille B où elle est sollicitée en compression par un ressort 21 logé dans un alésage 20. La coquille B est pourvue sur sa face inférieure d'un logement 14 dans lequel est claveté en 17 la partie supérieure 1 d'un axe de pivotement A. Cette partie A se prolonge vers le bas dans un alésage de forme correspondante 9 prévu dans un élément sous-jacent ou coquille inférieure C, la partie médiane 2 de l'axe A venant se loger dans un évidement central 7 de la coquille C tandis que la partie inférieure ou pivot 3 de l'axe A vient se loger dans un alésage 23 prévu dans une plaque de fond 22 solidarisée à la coquille C.

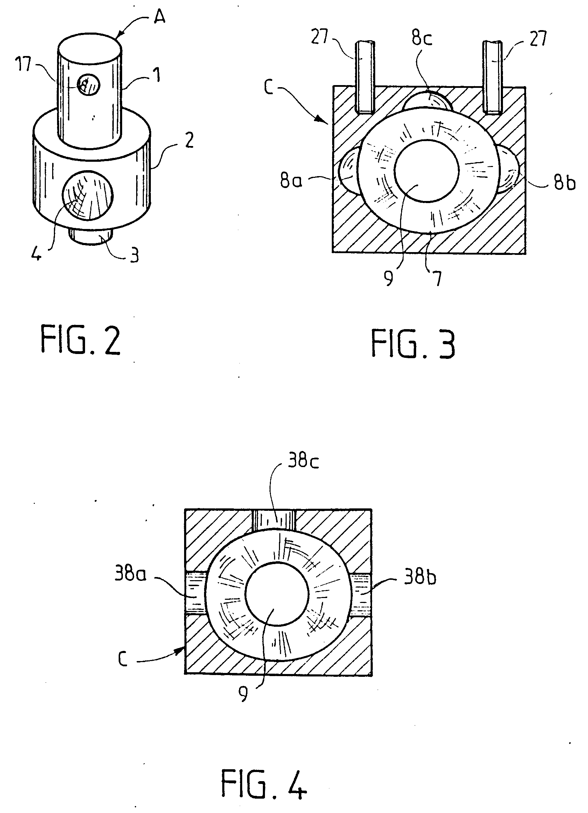

Comme représenté également sur la Figure 2, la partie centrale torique 2 de l'axe A est percée d'un alésage traversant horizontal 4 dont l'axe est perpendiculaire à l'axe vertical de l'axe de pivotement A. A l'intérieur de l'alésage 4 est disposé un ressort 5 qui sollicite vers l'extérieur deux billes 6 disposées à chacune de ses extrémités. Ces billes 6 sont respectivement reçues à l'intérieur de l'alésage 4 et dans des logements diamétralement opposés 8a, 8b.

Sur la Figure 3, sont également représentés les logements hémisphériques 8a et 8b ainsi qu'un logement 8c dont le rôle sera précisé dans ce qui suit.

Pour que l'ensemble devienne fonctionnel, les différents éléments exposés ci-dessus en référence aux dessins doivent être montés de la manière suivante :

On dispose dans l'alésage 4 de l'axe pivotant, représenté en détail sur la Figure 2, le ressort 5 puis les deux billes 6 à chacune des extrémités du ressort 5, ces deux billes étant en relief hors de l'alésage 4. On comprime le ressort 5 à l'aide des billes 6 pour encastrer l'axe pivotant A et ses éléments annexes dans la coquille C par le fond de celle-ci, de façon qu'émerge de la face supérieure de la coquille C la partie supérieure 1 de l'axe A. Compte tenu de l'ovalisation de l'évidement 7 de la coquille C et de la forte contrainte exercée par le ressort 5 sur les billes 6, l'axe pivotant A sera soumis à un couple qui le fera pivoter dans le sens de la plus grande largeur de l'évidement 7 de la coquille C où sont situées les deux logements ou encoches 8a, 8b, ménagées en vis-à-vis, dans lesquelles viendront se bloquer les deux billes 6, en bloquant ainsi l'axe pivotant A dans une position statique. Il y a lieu de préciser que les encoches 8a, 8b présentent un diamètre maximal légèrement inférieur au diamètre maximal des billes 6 afin de permettre à l'axe pivotant A de se déboîter en cas de heurt ou poussée du rétroviseur. Dans la position d'escamotage du rétroviseur, une des billes 6 vient s'encastrer dans l'évidement semi-sphérique 8c pour maintenir le rétroviseur en position escamotée, une simple pression inverse le ramenant automatiquement à sa position statique conditionnée par la spécificité du système. La plaque de fond 22 sera évidemment fixée sous la coquille C de manière telle que la partie inférieure 3 de l'axe pivotant A vienne s'encastrer à pivotement dans l'alésage 23 prévu sur la face supérieure de la plaque de fond 22. On obtient ainsi un centrage parfait des éléments A, C et 22, comme cela apparaît clairement sur la Figure 1.

La deuxième étape du montage consistera à disposer dans l'élément supérieur ou coquille B, la rotule 30 à l'intérieur d'un évidement correspondant 13 et ce par la superposition des deux demi-coquilles par l'intermédiaire de vis (non représentées aux dessins) passant par les alésages 15. Avant blocage définitif des deux demi-coquilles, on disposera l'élément B sur la partie supérieure 1 de l'axe pivotant A, émergeant de la coquille C en vue d'un blocage simultané des éléments mis en place dans la coquille B et de cette manière sur la partie 1 de l'axe A qui sera solidarisée à la coquille B par une clavette (non représentée aux dessins) traversant l'alésage 17 de la partie 1 et un alésage correspondant non représenté aux dessins de la coquille B. On pourra alors visser une molette du type vis-pointeau dans un alésage 16 prévu dans l'évidement 13 en vue du blocage de la rotule 30, après fixation du dispositif complet sur le véhicule.

La troisième étape consistera à introduire le bras 30a de la rotule 30 dans une pièce support 31a du boîtier 31, où il sera fixé au moyen de la vis 19. En cas de besoin, le bras 30a de la rotule sera prolongé par une tige 25 de dimension appropriée, à l'aide d'un manchon 24 fileté intérieurement, ou au carré avec des alésages 36 de dimensions correspondantes aux alésages 36 des tiges 30a et 25, respectivement, qui seront traversées par des goupilles ou clavettes.

Ce montage interviendra plus spécialement lorsque le véhicule aura à tracter des caravanes, remorques et analogue dont les dimensions transversales hors tout viennent déborder la cabine du conducteur. En cas de non-traction, un redémontage approprié sera effectué.

Le rétroviseur selon l'invention sera indéréglable après sa fixation sur le véhicule en procédant de la façon suivante. Le conducteur positionne son rétroviseur 31 et bloque la rotule 30 à l'aide de la molette vis-pointeau passant par l'alésage 16 de la coquille B. Lorsqu'un heurt, impact, choc ou pression s'exerce sur le rétroviseur, la coquille B bloquée sur l'axe pivotant A désenclanche ce dernier de sa position statique et la spécificité du dispositif amènera l'axe pivotant à sa position statique par rapport à laquelle a été positionné le rétroviseur, comme cela a été explicité ci-dessus. Si la poussée sur le rétroviseur dépasse le quart de tour dans un sens ou dans l'autre, l'une ou l'autre des billes 6 s'emboîtera dans l'encoche 8c et le rétroviseur restera escamoté dans le profil du véhicule. Cette même possibilité permettra au conducteur d'escamoter son rétroviseur dans la ligne du véhicule s'il le juge souhaitable, il suffira d'une poussée de la main pour que le rétroviseur retrouve sa position de visibilité préréglée. Lorsque le conducteur de ce même véhicule vient à changer et qu'il est nécessaire de faire un nouveau positionnement, il suffira à ce dernier de desserrer la molette, d'effectuer un nouveau réglage du rétroviseur à sa mesure et de resserrer la molette grâce à l'agencement original des éléments constitutifs du rétroviseur de l'invention, l'avantage du réglage d'un rétroviseur par l'intérieur d'un véhicule devient superflu.

Selon l'invention, la réversibilité du rétroviseur qu'il soit fixé côté gauche ou côté droit, s'effectuera par le déblocage de la molette vis-pointeau, le pivotement d'un demi-tour du boîtier 31, puis après prépositionnement personnalisé, on réalisera un reblocage de la rotule par resserrage de la molette. Il est à remarquer que quels que soient la ligne ou le style du véhicule, la forme ou la ligne du rétroviseur pourra varier en vue d'une bonne harmonie esthétique en conservant comme support invariable le dispositif objet de l'invention.

En ce qui concerne la fixation du rétroviseur avec son support, ce dernier pourra être fixé sur l'un des angles latéraux des portières avant avec éventuellement adjonction d'un joint 28 approprié. Il pourra également être fixé en un point quelconque des portières avant à l'aide de joints appropriés si nécessaire. Par ailleurs, les matériaux utilisés pour la fabrication des éléments constitutifs du dispositif selon l'invention, seront choisis en fonction des caractéristiques de résistance mécanique ou aux intempéries exigées par un produit sollicité par des contraintes diverses de déplacement et des variations climatiques.

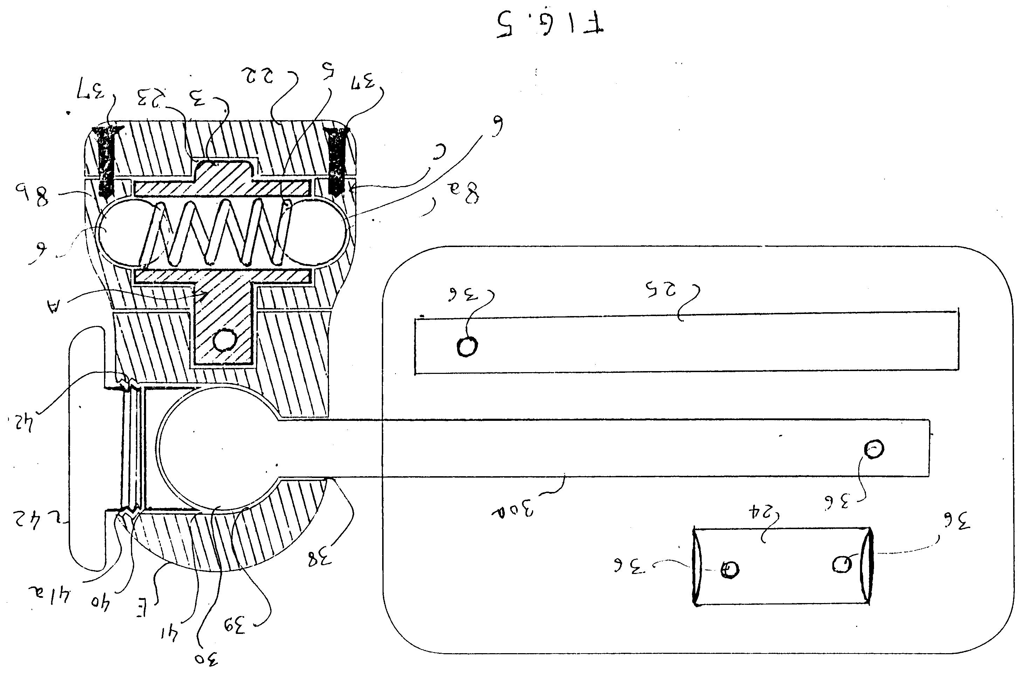

Dans la variante de réalisation représentée sur la Figure 5, la coquille E est un élément monobloc dans lequel est ménagé un logement interne 39 présentant une forme sensiblement hémisphérique et dimensionné de façon à pouvoir recevoir la rotule 30. Ce logement 39 est percé, d'une part, d'un premier alésage 38 dont le diamètre est égal, aux tolérances de montage près, à celui du bras 30a de la rotule 30, et, d'autre part, un second alésage 41 coaxial au premier alésage 38 et dont le diamètre est sensiblement égal à celui du logement. Ce second alésage 41 est destiné, d'une part, à recevoir à glissement une pièce mobile 40 dont la face en regard de la rotule est conformée pour s'adapter à cette dernière, et d'autre part, la partie taraudée 42a d'un bouton à molette 42, la zone la plus externe de l'alésage 41 présentant à cet effet une partie filetée 41a.

Dans cette forme de réalisation, la plaque de fond 22 est fixée à la coquille C par des vis 37. Bien que cela ne soit pas représenté sur le dessin, la plaque de fond 37 peut être conformée pour être montée sur tout élément d'adaptation de cette variante de rétroviseur sur un véhicule quelconque. Par ailleurs, cette variante de réalisation se monte de façon très aisée en introduisant le bras de la rotule 30a dans la coquille E de façon à le faire traverser l'alésage 38. La rotule 30 vient alors dans son logement 39 de la coquille E et l'on introduit à glissement l'élément 40 dans son alésage 41, après quoi, on visse la zone filetée de la molette 41a dans la partie filetée 41a de l'alésage 41 de façon que la pièce 40 vienne bloquer la rotule 30 dans le logement 39. On a également prévu des moyens de blocage de la molette 42, du type goupille ou vis (non représentés au dessin).

Il est clair que l'invention n'est nullement limitée aux formes de réalisation décrites ci-dessus et représentées aux dessins, mais qu'elle englobe toutes les modifications et variantes issues du même principe de base. C'est ainsi que la tige 30a de la rotule 30 pourra être conçue comme un dispositif télescopique ou bien un dispositif à crémaillère permettant les prolongements désirés du bras de rotule. De même, bien que les différents éléments A, B, C aient été assemblés par vis et clavettes, on peut également envisager de concevoir ces éléments sous forme d'éléments pouvant être assemblés par clipsage. On peut également prévoir un retournement à 180°C du miroir, ce qui fait de l'objet de l'invention un rétroviseur droite ou gauche éliminant les inconvénients des miroirs dits réversibles de la technique antérieure.

**Revendications**

1.  Rétroviseur extérieur pour véhicule susceptible de mouvement, du type camion, véhicules automobiles lourds ou légers, motocyclettes, vélomoteurs et engins analogues, ce rétroviseur comportant un boîtier-support de glace ou miroir, coopérant avec une rotule insérée dans un élément support monté à pivotement sur un second élément sous-jacent au premier élément, destiné à être fixé sur la carrosserie du véhicule, et ce de façon à pivoter librement vers l'avant ou vers l'arrière en revenant à une position statique par rapport à laquelle est réglé le rétroviseur, caractérisé par le fait que la rotule (30) est pourvue d'un bras (30a) se prolongeant à l'intérieur du boîtier-support de glace ou miroir et conçu de façon à pouvoir être positionné de façon réglable sur une structure (31a) du boîtier-support et que l'élément supérieur ou coquille (B, E) est accouplé à l'élément sous-jacent (C) par un axe pivotant (A) monté dans un logement interne de l'élément ou coquille (C) et comportant une partie supérieure (1) fixée dans un logement de forme correspondante (14), prévu dans la face inférieure de l'élément supérieur (B), une partie médiane périphériquement en relief agencée pour coopérer avec des moyens permettant le retour de l'axe (A) dans sa position statique ou de repos prédéterminée, et une partie inférieure (3) reçue à pivotement dans un alésage (23) d'une plaque de fond (22) solidarisée à la face inférieure de l'élément (C).

2. Rétroviseur selon la revendication 1, caractérisé en ce que les moyens permettant le retour de l'axe (A) dans sa position réglée prédéterminée sont constitués par des moyens élastiques (5) sollicitant vers l'extérieur des billes (6) qui sont, d'une part, disposées avec les moyens élastiques (5) dans un alésage (4) ménagé orthogonalement à l'axe (A) dont la partie médiane (2) présente un contour cylindrique coopérant avec le contour interne ovalisé de l'évidement (7) dans lequel elle est encastrée, et d'autre part dans des évidements périphériques internes (8a, 8b) prévus dans l'évidement (7) de l'élément sous-jacent (C).

3. Rétroviseur selon la revendication 2, caractérisé en ce qu'est prévu dans l'évidement (7) un troisième logement (8c) qui est destiné à recevoir une bille (8a, 8b) pour le maintien du rétroviseur en position escamotée dans le profil de la voiture.

4. Rétroviseur selon la revendication 2, caractérisé en ce que les évidements dans lesquels sont logées les billes sont constitués par des trous traversant (38a, 38b, 38c) prévus dans la paroi de l'élément inférieur ou coquille (C), le diamètre des trous (38a, 38b, 38c) étant sensiblement inférieur au diamètre des billes (6).

5. Rétroviseur selon l'une quelconque des revendications 2 et 4, caractérisé en ce que les billes sont en acier.

6. Rétroviseur selon la revendication 1, caractérisé en ce que la coquille (E) est monobloc, pourvue d'un logement interne (39) de forme sensiblement hémisphérique, conçu pour recevoir la rotule (30) et percé d'un premier alésage (38) de diamètre sensiblement égal à celui du bras de rotule (30a), un second alésage (41) de diamètre sensiblement égal à celui du logement (39) étant prévu, coaxial au premier alésage, pour recevoir des moyens de blocage de la rotule (40, 42).

7. Rétroviseur selon la revendication 6, caractérisé en ce que les moyens de blocage de la rotule (30) sont constitués par une pièce mobile (40) montée à glissement dans l'alésage (41) et conformée pour épouser la forme de la rotule (30), la pièce mobile (40) coopérant avec un bouton à molette (42) pour bloquer la rotule (30) dans la position désirée.

FIG. 1

EP 0 472 454 A1

FIG. 2

FIG. 3

FIG. 4

FIG.5

| Office européen des brevets | **RAPPORT DE RECHERCHE EUROPEENNE** | Numero de la demande |
|---|---|---|
| | | EP 91 40 2253 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 642 379 (KASSAPIAN)<br>* le document en entier * | 1 | B60R1/06 |
| A | --- | 2-5 | |
| Y | DE-A-2 403 570 (RAYDIOT LTD)<br>* revendications 1,3,4; figure 4 *<br>--- | 1 | |
| A | EP-A-0 352 762 (MEKRA RANGAU PLASTICS GMBH & CO KG)<br>* colonne 2, ligne 55 – colonne 3, ligne 12; figures 1-3 *<br>--- | 1 | |
| A | FR-A-509 657 (CONTREMOULINS)<br>* le document en entier * | 6,7 | |
| | ----- | | |

**DOMAINES TECHNIQUES RECHERCHES (Int. Cl.5)**

B60R
F16C

Le présent rapport a été établi pour toutes les revendications

| Lieu de la recherche | Date d'achèvement de la recherche | Examinateur |
|---|---|---|
| LA HAYE | 27 NOVEMBRE 1991 | DUBOIS B.F.J. |